**Europäisches Patentamt**

**European Patent Office**

**Office européen des brevets**

(19)

(11) Publication number : **0 481 770 A2**

# (12) EUROPEAN PATENT APPLICATION

(21) Application number : **91309557.6**

(22) Date of filing : **17.10.91**

(51) Int. Cl.⁵ : **G06F 1/00**

(30) Priority : **18.10.90 GB 9022650**

(43) Date of publication of application :
**22.04.92 Bulletin 92/17**

(84) Designated Contracting States :
**BE CH DE ES FR GB IT LI NL**

(71) Applicant : **THE CODEMASTERS SOFTWARE COMPANY LIMITED**
**Lower Farm House**
**Stoneythorpe, Southam, Warwickshire CV33 0DL (GB)**

(72) Inventor : **Darling, Richard**
**Flat 5, 15 Clarendon Square**
**Leamington Spa, Warwichshire CV32 5QT (GB)**

(74) Representative : **Bibby, William Mark et al**
**Mathisen, Macara & co. The Coach House 6-8 Swakeleys Road**
**Ickenham Uxbridge UB10 8BZ (GB)**

(54) **Data storage medium access verification system.**

(57) A verification system is used to deny a data processing unit (C) unauthorised access to data stored in a data storage medium. The verification system includes a verification program (V) which causes the data processing unit to generate a first authentification code and an authorisation code, bearing a first predetermined relationship to the first authentification code. The verification program enables the data processing unit to access the data in the data storage medium provided a second authentification code, bearing a second predetermined relationship to the first authentification code is input to the data processing unit. A remote processor (P) derives the second authentification code from the authorisation code. The second authorisation code can be received from, and the authorisation code supplied to, the remote processor (P) over a telephone link.

This invention relates to a verification system for denying a data processing unit unauthorised access to data stored in a data storage medium. The invention relates particularly, though not exclusively, to a verficiation system used to deny a games computer unauthorised access to a computer game or games stored in a games cassette, disc or cartridge, and especially pirated copies of such games.

Such verification systems are known; however, they are inconvenient in that they usually involve modifying both the data storage medium and the data processing unit into which the data storage medium is loaded.

According to the invention there is provided a verification system for denying a data processing unit unauthorised access to data stored in a data storage medium, comprising

verification means, provided in the data storage medium, for causing the data processing unit to generate a first authentification code and an authorisation code bearing a first predetermined relationship to the first authentification code, either the first authentification code or the authorisation code being generated randomly or pseudo-randomly, and for enabling the data processing unit to access the data stored in the data storage medium provided a second authentification code, bearing a second predetermined relationship to the first authentification code, is input to the data processing unit,

processing means, remote from the data processing unit, capable of deriving the second authentification code from the authorisation code,

and means enabling the authorisation code to be supplied to, and the corresponding second authentification code to be received from, the processing means, whereby the second authentification code is made available for input to the data processing means so that the data stored in the data storage medium can be accessed.

The verification means may be a verification program stored in the data storage medium.

The second authentification code, which is needed in order to access the stored data, cannot be deduced from the authorisation code alone, and must be obtained from the processing means. In this way, the verification system can exercise control over the use of the data stored in the data storage medium.

The inter-relationship of the codes may take a variety of alternative forms.

In a preferred embodiment of the invention, the authorisation code and the first authentification code are the same. In these circumstances, the second authentification code, derived by the remote processing means, may be an encryption of the authorisation code, and the verification program causes the data processing unit to derive the same encryption of the first authentification code and to compare the resultant code with the second authentification code (which should be identical to the resultant code) to determine whether or not the said predetermined relationship exists. Alternatively, the verification program could cause the data processing unit to derive the inverse-encryption of the second authentification code and compare the resultant code with the first authentification code - again the compared codes should be the same.

In another example, the authorisation code may be derived from the first authentification code. More specifically, the authorisation code may be an encryption of the first authentification code and the second authentification code, derived by the processing means, may be the inverse encryption of the authorisation code.

Alternatively, the first authentification code may be derived from the authorisation code. In this case, the first authentification code may be an encryption of the authorisation code and the second authentification code may be the same encryption of the authorisation code.

In a preferred embodiment of the verification system, the enabling means is arranged to monitor the supply and reception of the codes and to that end the enabling means may be part of a telecommunications network. More specifically, the enabling means may include a telephone line by which the user of the data processing unit can transmit the authorisation code to, and receive the second authentification code from, the processing means. The user could, for example, transmit the authorisation code as a succession of tonal or pulsed signals which he generates by dialling the code, or alternatively by voice.

Calls made on the telephone line are, of course, monitored so that the network operator can levy an appropriate charge on the caller and, by arrangement, a proportion of the charge levied will be received by the provider of the verification system.

Since, in this embodiment of the invention, the second authentification code can only be obtained via the telephone line, the verification system provides a means by which revenue can be earned whenever access to the data stored in the data storage medium is granted.

The verification system may be used to control access to pirated copies of data.

In an embodiment of the invention, the vertification system is operable to deny access by the data processing unit to data stored in the data storage medium whenever the stored data is a copy, and the verification means causes the data processing unit to generate said first authentification code and said authorisation code when the data processing unit recognises the data stored in the data storage medium as being a copy.

In a particular, though not exclusive, application of the verification system, the data processing unit is a games computer, the data storage media is a games cassette, disc or cartridge and the data stored in the data storage medium is a computer game; for example, a pirated computer game.

According to a further aspect of the invention, there is provided a method for denying a data processing unit unauthorised access to data stored in a data storage medium, comprising the steps of generating a first authentification code, generating an authorisation code, bearing a first predetermined relationship to the first authentification code, either the first authentification code or the authorisation code being generated randomly or pseudo-randomly, enabling a second authentification code to be derived from the authorisation code remotely from the data processing unit, denying the data processing unit access to the data stored in the data storage unit unless the second authentification code bears a second predetermined relationship to the first authentification code.

The enabling step may include supplying the authorisation code to, and receiving the second authentification code from a remote processing means via a telecommunications link.

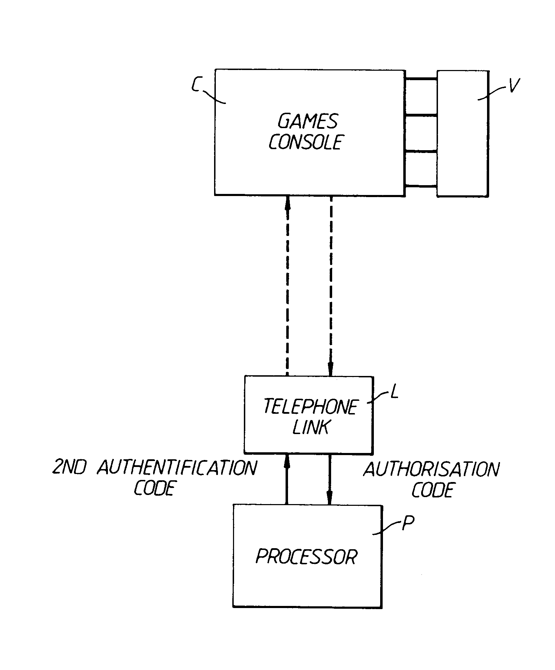

A verification system according to the invention is now described with reference to the accompanying drawing which shows a schematic representation of the system.

The verification system to be described is for use with a games computer loaded with a games cassette, disc or cartridge, and is intended to deny the games computer unauthorised access to a computer game or games stored in the cassette, disc or cartridge.

However, it will be appreciated that the invention is applicable to other kinds of data processing unit, such as a word processor for example, which is loaded with software stored on a suitable data storage medium, such as a cassette, disc or cartridge.

In this particular implementation of the invention, the verification system is used to exercise control over the use of pirated copies of computer games and, in effect, enables the provider of the system to levy a charge whenever a copy is used.

A variety of different schemes are available for detecting copies. A pirated copy of a computer game will normally contain less detail than the original and the disc drive of the games computer can be suitably programmed to detect this difference. If a copy is detected the verification system will become operative.

Referring now to the drawing, the verification system comprises a verification program V which is stored in the games cassette, disc or cartridge loaded into the user's games computer C, and the system also comprises a remote data processor P and a telecommunications link L by which the user can transmit data to, and receive data from, the remote data processor P.

Initially, the verification program V causes the games computer to generate a first authentification code and to perform a preset calculation on this code to generate an authorisation code.

In this particular implementation, the first authentification code is a random number which is generated by a suitable algorithm in the verification program and the authorisation code is an encryption of this number. Alternatively, the first authentification code could be a pseudo-random number derived from a look-up table in the verification program.

The user is denied access to the first authentification code but is granted access to the authorisation code, and to that end the authorisation code is displayed on the user's VDU.

The VDU also displays additional information telling the user what further steps need to be taken in order to access the game stored in the cassette, disc or cartridge.

In this example, the user is required to transmit the authorisation code to the remote processor P and this is accomplished via the telecommunications link L. The VDU displays the relevant telephone number enabling the user to make the connection to the processor P. The processor is arranged to respond to tonal or pulsed signals transmitted over the telephone line and so, once the connection has been made, the user is able to transmit the authorisation code to the processor by simply dialling the code on this telephone. Alternatively, it would be possible to transmit the authorisation code by voice.

The processor P performs the inverse-encryption on the received code in order to generate a second authentification code (which in this example is identical to the first authentification code) and this is transmitted back to the user via the telephone line. The user then inputs the second authorisation code to the games computer where it is compared with the first authorisation code. Provided the compared codes are the same, access to the computer game is granted.

It will be appreciated that the second authentification code, which is needed in order to access the computer game, cannot be deduced from the authorisation code alone, and must be obtained from the data processor P via the telecommunications link L. Each time a connection is made using the telecommunications link L, the network operator levies a charge on the user and, by arrangement with the operator, a proportion of the charge levied will be received by the provider of the verification system.

This facility, whereby the provider of a service receives a proportion of the charge levied by the network operator is available in the United Kingdom and many other countries and special telephone lines are allocated for the purpose.

It will be appreciated, therefore, that this implementation of the verification system provides a means by which revenue can be earned whenever access to a pirated game is granted.

It will be appreciated that the inter-relationship of the authorisation code and the first and second authentification codes may take a variety of alternative forms.

Thus, for example, the authorisation code and the first authentification code could be identical. In this case, the data processor would encrypt the authorisation code in order to generate the second authentification code and the games console would perform the same encryption on the first authentification code and check that the resultant code is the same as the second authentification code. Alternatively, the games computer could perform the inverse encryption on second authentification code and check that the resultant code is the same as the first authentification code.

In an alternative implementation, the first authentification code could be an encryption of the authorisation code, and in this case, the data processor P could perform the same encryption on the authorisation code in order to generate the second authentification code. The games computer would then check that the first and second authentification codes are the same.

It will be understood that although the above-identified embodiments require the user to supply data to, and receive data from the remote data processor P via the telecommunications link L, this need not necessarily be so. In an alternative arrangement, the telecommunications link L could be connected directly to the user's games computer via a suitable interface, such as a modem, for example, which could form a part of the user's computer.

It will be appreciated that a system of the kind described could be so programmed as to allow access by the data processing unit to data stored in a data storage medium for the duration of a specified session or sessions, or for the duration of a preset time or use period or to perform only a specified operation or specified operations within the programme.

Thus, in the case of a data processing unit in the form of a word processor, for example, the charge levied might, in effect, be based on the number of words used or the number of days the processor is in use. In the case of a computer games system, the charge levied may be based on a parameter in the game, such as the expiry of a set number of lives of a player (such as the main character).

In a further embodiment of the invention, the verification system could be used to exercise control over the use of original (i.e. uncopied) software, such as might be stored in a mass data storage medium e.g. a compact disc. Currently, the cost of purchasing such software is set relatively high to enable the software publisher to recoup at least some of the revenue that might otherwise be lost due to unauthorised copying of the original software, and this might deter a potential purchaser from purchasing the software particularly if he has only a limited need for the software or if he is uncertain as to the suitability of the software to his needs. A verification system in accordance with the invention enables the software publisher to recoup revenue on the basis of the actual use made by the purchaser of the software, allowing the publisher to distribute the software at a relatively low cost.

**Claims**

1. A verification system for denying a data processing unit unauthorised access to data stored in a data storage medium, comprising

   a verification means, provided in the data storage medium, for causing the data processing unit to generate a first authentification code and an authorisation code bearing a first predetermined relationship to the authentification code, either the first authentification code or the authorisation code being generated randomly or pseudo-randomly, and for enabling the data processing unit to access the data stored in the data storage medium provided a second authentification code, bearing a second predetermined relationship to the first authentification code, is input to the data processing unit,

   processing means, remote from the data processing unit, capable of deriving the second authentification code from the authorisation code,

   means enabling the authorisation code to be supplied to, and the corresponding second authentification code to be received from, the processing means whereby the second authentification code is made available for input to the data processing unit so that the data stored in the data storage medium can be accessed.

2. A verification system as claimed in claim 1, wherein the verification means is a verification program stored in the data storage medium.

3. A verification system as claimed in claim 1 or claim 2, wherein the authorisation code is derived from the first authentification code or vica versa.

4. A verification system as claimed in claim 3, wherein the authorisation code is an encryption of the first authentification code and the second authentification code, derived by the processing means, is the reverse-encryption of the authorisation code.

5. A verification system as claimed in claim 3, wherein the first authentification code is an encryption of the authorisation code and the second authentification code, derived by the processing means, is the same encryption of the authorisation code.

6. A verification system as claimed in any one of claims 1 to 5, wherein the first and second authentification codes or the authorisation code and the first authentification code are identical.

7. A verification system as claimed in claim 6, wherein the second authentification code, derived by the processing means, is an encryption of the authorisation code, and the verification program causes the data processing unit to derive the inverse-encryption of the second authentification input thereto and to compare the resultant code with the first authentification code whereby to determine whether or not the second predetermined relationship exists.

8. A verification system as claimed in claim 6, wherein the second authentification code, derived by the processing means, is an encryption of the authorisation code, and the verification program causes the data processing unit to derive the inverse encryption of the first authentification code and to compare the resultant code and the second authentification code whereby to determine whether or not the second predetermined relationship exists.

9. A verification system as claimed in any one of claims 1 to 8, wherein the enabling means is arranged to monitor the supply and reception of the codes.

10. A verification system as claimed in claim 9, wherein the enabling means is part of a telecommunications network.

11. A verification system as claimed in claim 10, wherein the enabling means includes a telephone line by which the user of the data processing unit can transmit the authorisation code to, and receive the second authentification code from, the processing means.

12. A verification system as claimed in claim 11, wherein the authorisation code is transmitted along the telephone line as a succession of tonal or pulsed signals.

13. A verification system as claimed in any preceding claim for denying the data processing unit unauthorised access to data stored in the data storage medium if the stored data is a pirated copy of an original of the data.

14. A verification system as claimed in any preceding claim, wherein data processing unit is a games computer, the data storage medium is a games cassette, disc or cartridge and the data stored in the data storage medium is a computer game or games.

15. A method for denying a data processing unit unauthorised access to data stored in a data storage medium, comprising the steps of
generating a first authentification code,
generating an authorisation code bearing a first predetermined relationship to the first authentification code, either the first authentification code or the authorisation code being generated randomly or pseudorandomly,
enabling a second authentification code to be derived from the authorisation code remotely from the data processing unit, and
denying the data processing unit access to the data stored in the data storage unit unless the second authentification code bears a second predetermined relationship to the first authentification code.

16. A method as claimed in claim 15, wherein the enabling step includes supplying the authorisation code to, and receiving the second authentification code from a remote processing means via a telecommunications link.